# FASCICULE DE BREVET EUROPEEN

(11) **EP 0 620 607 B1**
(45) Date de publication et mention de la délivrance du brevet: **06.08.1997**
(21) Numéro de dépôt: 94400740.0
(22) Date de dépôt: 06.04.1994
(51) Int. Cl.: H01M 6/52

(54) **Procédé de traitement de piles usagées par électrolyse**
Verfahren zur elektrolytischen Behandlung von Altbatterien
Method for electrolytical processing of used batteries

(30) Priorité: 16.04.1993 FR 9304493
(43) Date de publication de la demande: 19.10.1994
(73) Titulaire: RECUPYL S.A., 38000 Grenoble (FR)
(72) Inventeur: Poinsignon, Christiane, Jeanne, Lucienne, F-38000 Grenoble (FR); Tedjar, Farouk, F-38000 Grenoble (FR)
(74) Mandataire: Sueur, Yvette

(56) Documents cités:
- EP-A- 0 150 081
- EP-A- 0 268 319
- EP-A- 0 409 792
- CH-A- 676 169
- GB-A- 1 121 468
- GB-A- 1 134 575
- DATABASE WPI Week 8014, Derwent Publications Ltd., London, GB; AN 80-24439C & JP-A-55 024 924 (EBARA YUJIRAITO KK) 22 Février 1980

## Description

La présente invention concerne un procédé de traitement électrolytique de piles usagées permettant la récupération des éléments valorisables.

La protection de l'environnement est devenue une préoccupation majeure. Dans les déchets urbains, les piles et batteries électriques sont reconnues comme sources de produits toxiques nécessitant un traitement particulier. Différentes solutions ont déjà été proposées. Ainsi, le traitement des batteries au plomb et au nickel-cadmium est effectué depuis longtemps et conduit au recyclage du plomb et du nickel réutilisable notamment dans les fonderies de seconde fusion.

Le traitement des piles est plus complexe, du fait que leur composition et leur forme sont très variées. Plusieurs procédés ont été proposés. EP-A-409792 décrit un procédé de production simultanée de dioxyde de manganèse et de zinc par électrolyse de la solution obtenue en traitant par un solvant acide contenant de l'acide tétra fluoroborique, des composés tels que des oxydes de manganèse ou de zinc, des halogénures de zinc ou du zinc métallique, ce procédé pouvant être appliqué au traitement de piles usagées ayant subi une calcination à 550°C en atmosphère inerte. JP-60096734 décrit un procédé de traitement pour la récupération d'éléments valorisables à partir de piles usagées, dans lequel les piles sont d'abord broyées, puis chauffées à 500°C et ensuite soumises à un traitement chloroammoniacal, puis calcinées. Ces procédés nécessitent toutefois une étape de calcination qui rend les opérations longues et coûteuses.

La présente invention a pour but de fournir un procédé permettant la récupération d'éléments valorisables à partir de piles usagées, ne nécessitant pas de calcination et applicable à un mélange non trié de piles ayant des compositions différentes.

Le procédé de traitement de piles usagées de la présente invention est un procédé dans lequel on soumet les piles usagées à un traitement mécanique en vue de disloquer les enveloppes des piles, puis à un tri magnétique en vue de séparer les métaux ferreux des métaux non ferreux Hg, Mn, Zn, Cd et Ni, puis on soumet la fraction débarrassée des métaux ferreux à une flottation en vue d'éliminer les inertes et on soumet les boues minérales denses obtenues après la flottation à une lixiviation par l'acide sulfurique, caractérisé en ce que :
- on ajuste le pH de la solution obtenue après lixiviation à une valeur comprise entre 2,5 et 4 pour précipiter le sulfate et l'oxyde de mercure et l'on sépare le précipité obtenu;
- on réacidifie par addition d'acide sulfurique la solution obtenue après élimination des composés du mercure, puis on la soumet à une électrolyse au cours de laquelle le zinc se dépose sur la cathode et l'oxyde de manganèse se forme à l'anode.

De préférence, la cathode est une cathode en aluminium et l'anode est choisie parmi les anodes de plomb allié, les anodes de graphite et les anodes de titane anodisé.

Dans la suite du texte, l'électrolyse permettant le dépôt simultané de zinc et d'oxyde de manganèse sera désignée par électrolyse principale.

La taille des modules de piles les plus courantes varie entre 70 mm et 5 mm en hauteur et entre 30 mm et 5 mm en diamètre. Afin d'optimiser l'opération de broyage, un dispositif de calibration en continu est avantageusement placé en amont.

Le broyage peut être effectué dans un broyeur à disques dentés, de préférence à froid sous un courant d'air sec. Il provoque la dislocation de l'enveloppe métallique des piles et la réduction des tôles ferreuses à des tailles compatibles avec les opérations ultérieures.

La charge obtenue après broyage est lavée à l'eau et les résidus solides sont soumis à un tri magnétique. Un second broyage, effectué sur les résidus solides issus du tri magnétique permet une réduction plus fine de ces résidus, ce qui présente un avantage dans la mesure où la granulométrie de la charge conditionne l'efficacité et la durée de la lixiviation et de la flottation.

Les boues débarrassées des matières ferreuses sont soumises à une flottation. Elle permet la séparation des inertes qui sont des composés à base de noir de carbone, des perfluoroalkylsulfonates, des plastiques et du papier.

Les boues minérales denses obtenues après flottation renferment les oxydes et métaux non-ferreux alors que la solution se trouve enrichie en électrolyte, principalement sous forme de potasse, de chlorure de zinc et d'ammonium.

La lixiviation par l'acide sulfurique des boues minérales denses conduit à la mise en solution des composants des électrodes des piles broyées. La réaction est assez exothermique et maintient une température adaptée au processus réactionnel.

Le mercure est éliminé par précipitation sélective. Pour obtenir la précipitation d'oxydes et du sulfates de mercure, le pH est ajusté à une valeur entre 2,5 et 4, par exemple par addition de potasse.

L'électrolyse principale est avantageusement effectuée à une température inférieure à 100°C. De préférence, la température est comprise entre 20°C et 95°C. Le bain de l'électrolyse principale est constitué essentiellement par la solution obtenue après flottation et élimination des composés de mercure, qui contient du sulfate de zinc, du sulfate de manganèse, de l'acide sulfurique. La teneur en sulfate de manganèse du bain est ajustée entre 80 et 320 g/l, la teneur en sulfate de zinc entre 60 et 400 g/l et la teneur en acide sulfurique est ajustée entre 25 et 40 g/l. Les densités anodiques varient entre 0,7 A/dm² et 2,8 A/dm² et les densités de courant cathodique varient entre 0,5 A/dm² et 5 A/dm². Le dégagement de gaz accompagnant les réactions principales aux électrodes et l'évaporation peuvent être minimisées par flottation d'une fine couche de paraffine ou d'huile au-dessus du bain.

Lors de l'électrolyse principale, le zinc est obtenu sous forme de dépôt sur la cathode ; l'oxyde de manganèse est obtenu sous forme de dépôt sur l'anode ou sous forme de poudre tombant au fond de la cellule d'électrolyse, suivant la température du bain.

Dans un mode de mise en oeuvre particulier du procédé de l'invention, il est avantageux d'ajouter un agent réducteur au bain d'électrolyse. Cet agent réducteur permet d'éviter ou de limiter la formation d'oxydes de manganèse du type cryptomélane ou phyllomanganate, et par conséquent de favoriser l'obtention d'oxyde de manganèse au degré d'oxydation le plus faible. L'agent réducteur peut être choisi parmi l'acide borique, l'acide formique et le formaldéhyde.

Lorsque l'électrolyse principale est effectuée après addition d'un agent réducteur au bain d'électrolyse, le procédé de l'invention permet d'obtenir du manganèse sous forme métallique. A cet effet, l'on traite par l'acide sulfurique l'oxyde de manganèse obtenu à l'anode après l'électrolyse principale, l'on ajoute éventuellement à la solution de sulfates obtenue un additif améliorant le rendement cathodique tel que le pyrogallol, l'acide formique, le formaldéhyde, l'alcool cyanamillique ou l'acide fumarique, et l'on soumet la solution obtenue à une seconde électrolyse, au cours de laquelle le manganèse métal se dépose sur la cathode, alors que l'oxyde de manganèse se dépose faiblement sur l'anode. Le matériau utilisé pour la cathode est la stellite, et le matériau utilisé pour l'anode est choisi parmi le plomb, le graphite ou le titane anodisé.

Pour la seconde électrolyse, la teneur en sulfate de manganèse du bain est ajustée entre 40 et 100 g/l. Le bain contient en outre de 10 à 90 g/l de sulfate d'ammonium ou de potassium, et éventuellement du chlorure de potassium, additionné de l'additif précité améliorant le rendement faradique. Le pH du bain est maintenu à une valeur entre 5 et 6,5. La densité de courant varie entre 4 mA/cm² et 60 mA/cm². Suivant la concentration en sulfate du bain, la température est fixée à une valeur entre 20°C et 60°C.

Cette seconde électrolyse peut être effectuée dans une cellule à diaphragme.

Lorsque la solution soumise à l'électrolyse principale ne contient pas de zinc, l'addition à cette solution d'un agent réducteur tel que par exemple l'acide borique, l'acide formique ou le formaldéhyde, permet d'obtenir immédiatement un dépôt de manganèse métallique sur la cathode, sans que la seconde électrolyse soit nécessaire.

A la fin de l'électrolyse principale, la bain d'électrolyse restant est riche en acide sulfurique et il peut être réutilisé avantageusement comme solution acide pour l'étape de lixiviation. Ce recyclage du bain de l'électrolyse principale d'une part permet d'éviter le retraitement ou le rejet de volumes importants d'effluents acides, et d'autre part rend le procédé plus économique.

Suivant la nature des piles traitées, le mélange peut contenir des métaux tels que le cuivre, le nickel ou le cadmium, à des concentrations variables.

Lorsque le mélange de piles contient du cuivre, celui-ci peut être récupéré par cémentation de la solution obtenue après la lixiviation.

Lorsque le mélange de piles contient du nickel et/ou du cadmium, le nickel et/ou le cadmium peuvent être extraits de la solution obtenue après l'électrolyse principale, par une électrolyse sélective. Lorsque la teneur en nickel et/ou en cadmium de la solution à traiter est inférieure à 40 g/l, l'électrolyse sélective est effectuée en circulation sur une boucle dérivée après l'électrolyse principale. Si la teneur en nickel et/ou en cadmium de la solution à traiter est supérieure à 40 g/l, l'électrolyse sélective est effectuée en statique.

Pour l'électrolyse sélective, le potentiel est maintenu entre 1,5 V et 5 V, le pH est fixé à une valeur allant de 4 à 5,5, la température du bain est maintenue de préférence entre 25 et 50°C. La cathode est avantageusement en tôle de fer et l'anode en plomb allié.

Le procédé de la présente invention est illustré par les exemples suivants qui ne sauraient limiter l'invention.

### EXEMPLE 1

Un mélange de piles ayant la composition suivante
- masse cathodique 72,8 g (oxydes de Mn, carbone, KOH)
- masse anodique 28,8 g (Zn, KOH, Hg, oxyde de Zn)
- acier 21,9 g
- papier + plastique 7,8 g
- tige contact anodique 0,6 g
a été broyé dans un broyeur à disques dentés, à froid sous courant d'air sec, pendant 1 heure. La masse résultante a été soumise à un tri magnétique à l'aide d'un séparateur magnétique classique. La fraction débarrassée des métaux ferreux a été soumise à une flottation à température ambiante, sous agitation pneumatique. La partie dense a été soumise à une lixiviation par l'acide sulfurique à 150 g/l à température ambiante sous agitation mécanique pendant 2 heures. Le pH de la solution a été ajusté à 3,75 et un précipité d'oxyde de mercure s'est formé. Le pH de la solution obtenue après filtration a été ajusté à 2 par addition d'acide sulfurique. La solution a ensuite été soumise à l'électrolyse principale dans les conditions suivantes :
- MnSO₄ = 110 g/l
- ZnSO₄ = 140 g/l
- T = 80°C
- I anodique = 1,2 A/dm² (anode en plomb antimonié)
- I cathodique = 2,4 A/dm² (cathode en aluminium)
- Rendement faradique en MnO₂ : 68%
- Rendement faradique en zinc : 80 %

L'analyse par diffraction X du dépôt anodique confirme l'indexation selon ε MnO₂ (ASTM N.30-0820).

### EXEMPLE 2

Un lot de piles identique à celui de l'exemple 1 a été traité de la même manière que dans l'exemple 1 jusqu'à l'élimination du précipité d'oxyde de mercure. Ensuite, le pH de la solution a été ajusté à une valeur de 2,5, puis on a ajouté de l'acide formique. La solution a ensuite été soumise à l'électrolyse principale dans les conditions suivantes :
- MnSO₄ = 110 g/l
- ZnSO₄ = 140 g/l
- T = 80°C
- I anodique = 1,2 A/dm² (anode en plomb antimonié)
- I cathodique = 2,4 A/dm² (cathode en aluminium)
- Rendement faradique en MnO₂ : 25%
- Rendement faradique en zinc : 89 %.

L'oxyde de manganèse formé lors de l'électrolyse principale a été redissous par l'acide sulfurique. A la solution de sulfate de manganèse ainsi obtenue, on a ajouté du sulfate de potassium et du pyrogallol. Le pH de la solution a été maintenu à 5,8. La composition du bain était la suivante : 50 g/l de sulfate de manganèse, 80 g/l de sulfate de potassium, 5 g/l de chlorure d'ammonium et 0,5 g/l de pyrogallol. La conductivité du bain était de 52 mS à 18°C et la densité de courant de 38 mA/cm². Un dépôt de manganèse métallique s'est formé sur la cathode.

## Revendications

1. Procédé de traitement de piles électriques usagées en vue de la récupération des éléments valorisables, dans lequel on soumet les piles usagées à un traitement mécanique en vue de disloquer les enveloppes des piles, puis à un tri magnétique en vue de séparer les métaux ferreux des métaux non ferreux Hg, Mn, Zn, Cd et Ni, puis on soumet la fraction débarrassée des métaux ferreux à une flottation en vue d'éliminer les inertes et on soumet les boues minérales denses obtenues après la flottation à une lixiviation par l'acide sulfurique, caractérisé en ce que :
- on ajuste le pH de la solution obtenue après lixiviation à une valeur comprise entre 2,5 et 4 pour précipiter le sulfate et l'oxyde de mercure et l'on sépare le précipité obtenu;
- on réacidifie par addition d'acide sulfurique la solution obtenue après élimination des composés du mercure, puis on la soumet à une électrolyse au cours de laquelle le zinc se dépose sur la cathode et l'oxyde de manganèse se forme à l'anode.

2. Procédé selon la revendication 1, caractérisé en ce que l'on utilise pour l'électrolyse une cathode en aluminium.

3. Procédé selon la revendication 1, caractérisé en ce que l'on utilise pour l'électrolyse, une anode en plomb allié, en graphite ou en titane anodisé.

4. Procédé selon la revendication 1, caractérisé en ce que la température de mise en oeuvre est inférieure à 100°C.

5. Procédé selon la revendication 4, caractérisé en ce que la température de mise en oeuvre est comprise entre 40°C et 95°C.

6. Procédé selon la revendication 1, caractérisé en ce que l'on ajoute au bain d'électrolyse un agent réducteur.

7. Procédé selon la revendication 6, caractérisé en ce que l'agent réducteur est choisi parmi l'acide borique, l'acide formique et le formaldéhyde.

8. Procédé selon la revendication 1, caractérisé en ce que l'on utilise pour la lixiviation la solution riche en acide obtenu à la fin de l'électrolyse.

9. Procédé selon la revendication 1, caractérisé en ce que l'on soumet les piles à un broyage à froid sous courant d'air sec.

10. Procédé selon la revendication 1, caractérisé en ce que l'on soumet à un second broyage, avant la flottation, la fraction débarrassée des métaux ferreux.

11. Procédé selon la revendication 1, caractérisé en ce que l'on soumet la solution obtenue après lixiation à une cémentation en vue d'extraire le cuivre, avant d'ajuster le pH pour l'extraction des composés de mercure.

12. Procédé selon la revendication 1, caractérisé en ce que l'on soumet la solution obtenue après l'électrolyse à une électrolyse supplémentaire sélective en vue d'extraire le cadmium et/ou le nickel.

13. Procédé selon la revendication 12, caractérisé en ce que l'on effectue l'électrolyse sélective à un potentiel fixé entre 1,5 V et 5 V sous agitation pneumatique, à un pH entre 4 et 5,5, la température étant maintenue entre 25°C et 50°C.

14. Procédé selon la revendication 12, caractérisé en ce que l'on utilise une anode en plomb allié pour l'électrolyse sélective.

15. Procédé selon la revendication 12, caractérisé en ce que l'on utilise une cathode en tôle de fer pour l'électrolyse sélective.

16. Procédé selon la revendication 12, caractérisé en ce que l'électrolyse sélective est une électrolyse statique.

17. Procédé selon la revendication 12, caractérisé en ce que l'électrolyse sélective est une électrolyse en circulation sur une boucle dérivée.

18. Procédé selon la revendication 6, caractérisé en ce que l'on traite par l'acide sulfurique l'oxyde de manganèse obtenu après l'électrolyse, l'on ajoute à la solution de sulfates obtenue du pyrogallol ou de l'acide formique et l'on soumet la solution obtenue à une seconde électrolyse dans une cellule à diaphragme.

19. Procédé selon la revendication 18, caractérisé en ce que l'on utilise pour la seconde électrolyse une cathode de stellite et une anode en graphite, en plomb ou en titane.

## Claims

1. A method for processing used electric batteries in order to recover the re-usable elements, in which the used batteries are subjected to mechanical treatment in order to dislodge the casings from the batteries, then to magnetic sorting in order to separate the ferrous metals from the non-ferrous metals Hg, Mn, Zn, Cd and Ni, then the fraction rid of the ferrous metals is subjected to flotation in order to eliminate the inert substances and the thick mineral sludges obtained after the flotation are subjected to leaching by sulphuric acid, characterised in that:
- the pH of the solution obtained after leaching is adjusted to a value of between 2.5 and 4 in order to precipitate the mercury sulphate and oxide, and the precipitate obtained is separated;
- the solution obtained after elimination of the mercury compounds is reacidified by the addition of sulphuric acid, then it is subjected to electrolysis during which the zinc is deposited on the cathode and the manganese oxide is formed at the anode.

2. A method according to Claim 1, characterised in that an aluminium cathode is used for the electrolysis.

3. A method according to Claim 1, characterised in that an anode of alloyed lead, graphite or anodised titanium is used for the electrolysis.

4. A method according to Claim 1, characterised in that the processing temperature is less than 100°C.

5. A method according to Claim 4, characterised in that the processing temperature is between 40°C and 95°C.

6. A method according to Claim 1, characterised in that a reducing agent is added to the electrolytic bath.

7. A method according to Claim 6, characterised in that the reducing agent is selected from boric acid, formic acid and formaldehyde.

8. A method according to Claim 1, characterised in that the solution rich in acid obtained at the end of the electrolysis is used for the leaching.

9. A method according to Claim 1, characterised in that the batteries are subjected to cold crushing under a current of dry air.

10. A method according to Claim 1, characterised in that the fraction rid of the ferrous metals is subjected to a second crushing operation, before the flotation.

11. A method according to Claim 1, characterised in that the solution obtained after leaching is subjected to cementation in order to extract the copper, before adjusting the pH for the extraction of the mercury compounds.

12. A method according to Claim 1, characterised in that the solution obtained after the electrolysis is subjected to additional selective electrolysis in order to extract the cadmium and/or the nickel.

13. A method according to Claim 12, characterised in that the selective electrolysis is effected at a fixed potential of between 1.5 V and 5 V with pneumatic agitation, at a pH between 4 and 5.5, the temperature being kept between 25°C and 50°C.

14. A method according to Claim 12, characterised in that an alloyed lead anode is used for the selective electrolysis.

15. A method according to Claim 12, characterised in that a plate iron cathode is used for the selective electrolysis.

16. A method according to Claim 12, characterised in that the selective electrolysis is a static electrolysis.

17. A method according to Claim 12, characterised in that the selective electrolysis is an electrolysis in circulation on a branched loop.

18. A method according to Claim 6, characterised in that the manganese oxide obtained after the electrolysis is treated with sulphuric acid, pyrogallol or formic acid is added to the solution of sulphates obtained and the solution obtained is subjected to a second electrolysis in a diaphragm cell.

19. A method according to Claim 18, characterised in that a stellite cathode and a graphite, lead or titanium anode are used for the second electrolysis.

## Patentansprüche

1. Verfahren zur Behandlung von Altbatterien zwecks Wiedergewinnung der verwertbaren Elemente, bei dem die Altbatterien einer mechanischen Behandlung unterzogen werden, um die Batteriehüllen zu entfernen, dann einer Magnetscheidung, um die Eisenmetalle von den Nicht-eisenmetallen Hg, Mn, Zn, Cd und Ni zu trennen, dann der von den Eisenmetallen befreite Teil einer Flotation unterzogen wird, um die Inertstoffe zu entfernen, und die nach der Flotation erhaltenen dichten Mineralschlämme einer Laugung mit Schwefelsäure unterzogen werden, dadurch gekennzeichnet, daß
- der pH-Wert der nach der Laugung erhaltenen Lösung auf einen Wert zwischen 2,5 und 4 eingestellt wird, um das Quecksilbersulfat und -oxid auszufällen und der erhaltene Niederschlag abgetrennt wird;
- die nach dem Entfernen der Quecksilberverbindungen erhaltene Lösung durch Zugabe von Schwefelsäure wieder angesäuert und dann einer Elektrolyse unterzogen wird, in deren Verlauf sich das Zink auf der Kathode abscheidet und das Manganoxid an der Anode bildet.

2. Verfahren nach Anspruch 1, dadurch gekennzeichnet, daß für die Elektrolyse eine Aluminiumkathode verwendet wird.

3. Verfahren nach Anspruch 1, dadurch gekennzeichnet, daß für die Elektrolyse eine Anode aus Bleilegierung, Graphit oder anodisch oxidiertem Titan verwendet wird.

4. Verfahren nach Anspruch 1, dadurch gekennzeichnet, daß die Arbeitstemperatur unter 100°C liegt.

5. verfahren nach Anspruch 4, dadurch gekennzeichnet, daß die Arbeitstemperatur zwischen 40 und 95°C liegt.

6. Verfahren nach Anspruch 1, dadurch gekennzeichnet, daß dem Elektrolysebad ein Reduktionsmittel zugegeben wird.

7. Verfahren nach Anspruch 6, dadurch gekennzeichnet, daß das Reduktionsmittel aus Borsäure, Ameisensäure und Formaldehyd ausgewählt ist.

8. Verfahren nach Anspruch 1, dadurch gekennzeichnet, daß für die Laugung die am Ende der Elektrolyse erhaltene säurereiche Lösung verwendet wird.

9. Verfahren nach Anspruch 1, dadurch gekennzeichnet, daß die Batterien einer Kaltzerkleinerung unter trockenem Luftstrom unterzogen werden.

10. Verfahren nach Anspruch 1, dadurch gekennzeichnet, daß der von den Eisenmetallen befreite Teil vor der Flotation einer zweiten Zerkleinerung unterzogen wird.

11. Verfahren nach Anspruch 1, dadurch gekennzeichnet, daß die nach dem Auslaugen erhaltene Lösung einer Zementation unterzogen wird, um das Kupfer zu extrahieren, bevor der pH-Wert für die Extraktion der Quecksilberverbindungen eingestellt wird.

12. Verfahren nach Anspruch 1, dadurch gekennzeichnet, daß die nach der Elektrolyse erhaltene Lösung einer zusätzlichen selektiven Elektrolyse unterzogen wird, um das Kadmium und/oder das Nickel zu extrahieren.

13. Verfahren nach Anspruch 12, dadurch gekennzeichnet, daß die selektive Elektrolyse unter Luftrühren bei einem pH-Wert zwischen 4 und 5,5 bei einer zwischen 1,5 V und 5 V festgelegten Spannung durchgeführt wird, wobei die Temperatur zwischen 25 und 50°C gehalten wird.

14. Verfahren nach Anspruch 12, dadurch gekennzeichnet, daß für die selektive Elektrolyse eine Anode aus Bleilegierung verwendet wird.

15. Verfahren nach Anspruch 12, dadurch gekennzeichnet, daß für die selektive Elektrolyse eine Kathode aus Eisenblech verwendet wird.

16. Verfahren nach Anspruch 12, dadurch gekennzeichnet, daß es sich bei der selektiven Elektrolyse um eine statische Elektrolyse handelt.

17. Verfahren nach Anspruch 12, dadurch gekennzeichnet, daß die selektive Elektrolyse eine Kreislaufelektrolyse in einer Abzweigschlaufe ist.

18. Verfahren nach Anspruch 6, dadurch gekennzeichnet, daß das nach der Elektrolyse erhaltene Manganoxid mit Schwefelsäure behandelt wird, der erhaltenen Sulfatlösung Pyrogallol oder Ameisensäure zugegeben wird und die erhaltene Lösung einer zweiten Elektrolyse in einer Membranzelle unterzogen wird.

19. Verfahren nach Anspruch 18, dadurch gekennzeichnet, daß für die zweite Elektrolyse eine Stellitkathode und eine Anode aus Graphit, Blei oder Titan verwendet werden.
